# EUROPEAN PATENT SPECIFICATION

(11) **EP 1 114 262 B1**
(45) Date of publication and mention of the grant of the patent: **28.04.2004**
(21) Application number: 99962554.4
(22) Date of filing: 31.12.1999
(51) Int. Cl.: F16H 37/04, F16H 3/66

(54) **POWER TRANSMITTING DEVICE WITH MULTIPLE OVERDRIVER**
LEISTUNGSGETRIEBE MIT MEHREREN PLANETENRADANTRIEBEN
DISPOSITIF DE TRANSMISSION DE PUISSANCE A SURMULTIPLICATEUR MULTIPLE

(30) Priority: 31.12.1998 KR 6329598
(43) Date of publication of application: 11.07.2001
(73) Proprietor: Ha, Tae-Hwan, Nowon-ku, Seoul 139-230 (KR)
(72) Inventor: Ha, Tae-Hwan, Nowon-ku, Seoul 139-230 (KR)
(74) Representative: Schulze, Carsten, Dr.
(86) International application number: PCT/KR1999/000853
(87) International publication number: WO 2000/040876

(56) References cited:
- EP-A2- 0 040 904
- FR-A1- 2 618 866
- US-A- 4 624 154

## Description

### TECHNICAL FIELD

The present invention relates to a power transmitting device, more particularly that maximal output speed is produced by a planetary transmission and multiple overdriver which is driven by a power source unit.

### BACKGROUND ART

A conventional power transitting device employs plural sub-device for improving performance of driving power which is generated by a power source.
In general the power is transmitted by the transmitting device to be output with optimal speed and torque. It is important to adapt the transmission for the optimal speed and torque.

An example of the transmitting device is a transmission which includes assembly of a gearset with a differential gear ratio respectively, the transmission outputs the speed according to a driving power which is output from the power source.

Presently transmissions are manual and automatic transmissions. The automatic transmission objective is to provide output of optimal speed and improve fuel economy. Various attempts have been made to increase the speed ratio number produced by the automatic transmission by adding an auxiliary gearset which is delivered by path of an initial planetary gearset, multiple gearset, and a last gearset.

The auxiliary gearset is coaxially aligned with an input shaft or a crankshaft of power source.

An example of such device is disclosed in U.S. Pat.No. 5,538,482, of Tanzer et al. issued on July 23, 1996 which describes a multiple-speed axle mechanism providing overdrive and direct drive. It is disclosed to increase the speed ratio number using a clutch having first friction elements and a brake means. Thus it can operate in an overdrive mode. Such device has the clutch and brakes adapted to two main axles respectively, so it has a complex structure and only operates in a single overdrive mode.

Another example of the overdriver device is disclosed in U.S. Pat.No. 5,951,424, of Briceland issued on September 14, 1999. This invention of a continuously variable drive transmission has been disclosed. Briceland claims only simple planetary gearset like the conventional overdriver device. It is unsatisfactory because the increase of speed ratio is only 25% which has limited ωc1=0 by the formula of Briceland. Another disadvantage is that the patent does not to clear of a valve for controlling the planetary gearset.

Another multiple speed automotive transmission is disclosed in U.S. Pat.No. 5,868,645, of Beim et al. issued on February 9, 1999. Features of this patent disclose a variable speed with multiple. Many shafts which are provided and driven by a power source, e.g.i intermediate shaft, input shaft and output shaft, thus causing a loss of the torque during transmission between therein. To gain the torque loss of the shafts, a drive clutch is installed. This transmission is a conventional type which is manually-operated during driving.

The above disclosures are attempts to improve fuel economy with the transmission and overdriver respectively, which have no reference to the auxiliary device.

### DISCLOSURE OF INVENTION

It is an object of the present invention to provide a multiple overdriver for increasing the speed of an output shaft.

It is another object of the present invention to provide automatic transmission in continuous meshing engagement with gearset to realize an inproved automatic transmission.

It is another object of the present invention to provide drive transmitting device assembly which is adapted from a power source, multiple overdriver, and a transmission to the output shaft.

The simple structure of the device assembly has advantages especially. This device compensates for a loss of torque.

The present invention comprises: a power source unit having an internal combustion engine; a first drive transmitting member for transmitting the driving power by the power source; a second drive transmitting member having an upper gear and a lower gear for transmitting the driving power by the first drive transmitting member; an output shaft for outputting the torque and speed by the second drive transmitting member; a hyper-overdriver connects the first drive transmitting member and the second drive transmitting member for hyper-overdriving the speed ratio number of the output shaft and controlling the output driving power which is inputted by the first drive transmitting member; and an automatic transmission in continuous meshing engagement with the lower gear of the second drive transmitting member and the output shaft, the transmission being coaxially aligned by a support bearing member, the transmission including a forward transmitting gearset for changing the torque which is transmitted by the second drive transmitting member into the number of the speed ratio at least three therein, a low overdrive gear for overdriving the speed of the output shaft, a backward transmitting gearset having idle gear for reversing the rotation of the second transmitting member.

### BRIEF DESCRIPTION OF DRAWINGS

This invention will be better understood and its various objects and advantages will be more fully appreciated from the following description taken in conjunction with the accompanying drawings, in which:
Fig. 1 is a schematic diagram according to the present invention;
Fig. 2 is a exploded view according to a preferred embodiment of the present invention;
Figs. 3A to 3F are sectional views of a planetary gearset according to a preferred embodiment of the present invention;
Fig. 4 is a schematic diagram of brake drive according to the present invention;
Fig. 5 show a brake member;
Fig. 6 is a sectional view of an engine according to the present invention;
Figs. 7 is a sectional view of a hyper-overdriver according to the present invention;
Fig. 8 is a brake member according to another embodiment of the present invention;
Fig. 9 shows in details Fig. 8.

### BEST MODE FOR CARRYING OUT THE INVENTION

Hereinafter, this invention will be described in detail with reference to the drawings.

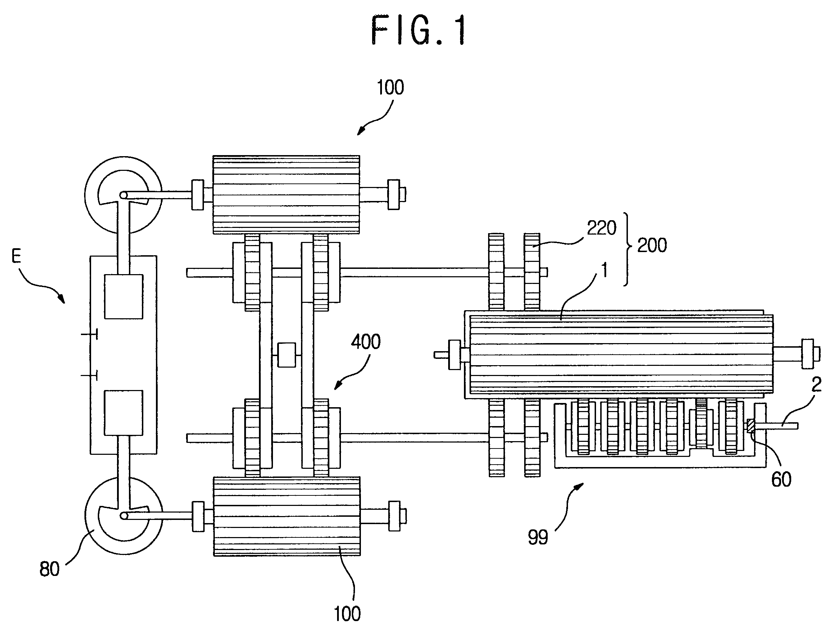

Referring to FIG. 1, the power transmitting device with multiple overdriver comprises a power source unit E which has an internal combustion engine 80, a first drive transmitting member 100 for transmitting the driving power from the power source, a second drive transmitting member 200 has an upper gear 220 and a lower gear 1 for transmitting the driving power from the first drive transmitting member 100, an output shaft 2 for outputting the torque and speed by the second drive transmitting member 200, a hyper-overdriver 400 connects the first drive transmitting member 100 and the second drive transmitting member 200, for hyper-overdriving the speed ratio number of the output shaft 2 and controlling the output driving power which is inputted by the first drive transmitting member 100 and an automatic transmission 99 in continuous meshing engagement with the lower gear 1 of the second drive transmitting member 200 and the output shaft 2, by which the automatic transmission 99 is coaxially aligned by a support bearing member 60.

The first drive transmitting member 100 and second drive transmitting member 200 adapt to a gear or belt. This embodiment describes the gear accordingly.

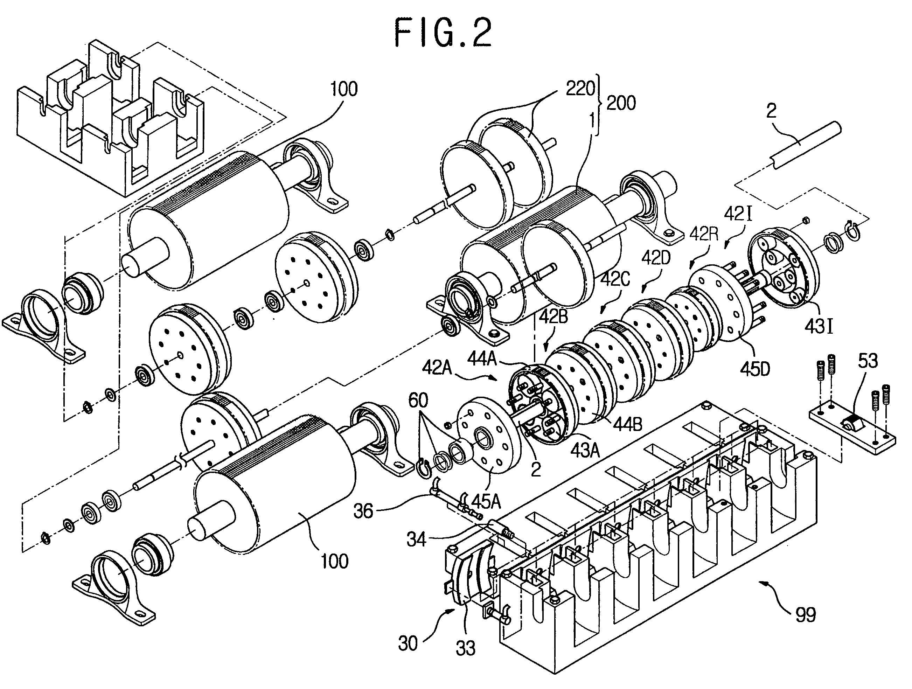

The transmission 99 is in continuous meshing engagement with the lower gear 1 of the second drive transmitting gear 200 shown in FIG. 2. The output shaft 2 is formed at an end part for power torque of the transmission 99. The transmission 99 has a planetary gearset coaxially aligned with the output shaft 2 and supported by the support bearing member 60.

The planetary gearset includes a forward transmitting gearset 42A, 42B, 42C, for changing the torque and speed which are transmitted by the second drive transmitting gear 200 into the speed ratio number of at least three therein, a low overdrive gear 42D for overdriving the speed of the output shaft 2, a backward transmitting gearset 42R having an idle gear 53 for reversing the rotation of the second transmitting member 200, an overturn gearset 42I for increasing the braking efficiency when the transmission 99 is driven at high speed. The overturn gearset 42I has an inverse gear 43I for inversing direction of the output shaft 2 which only rotates inversely at high speed.

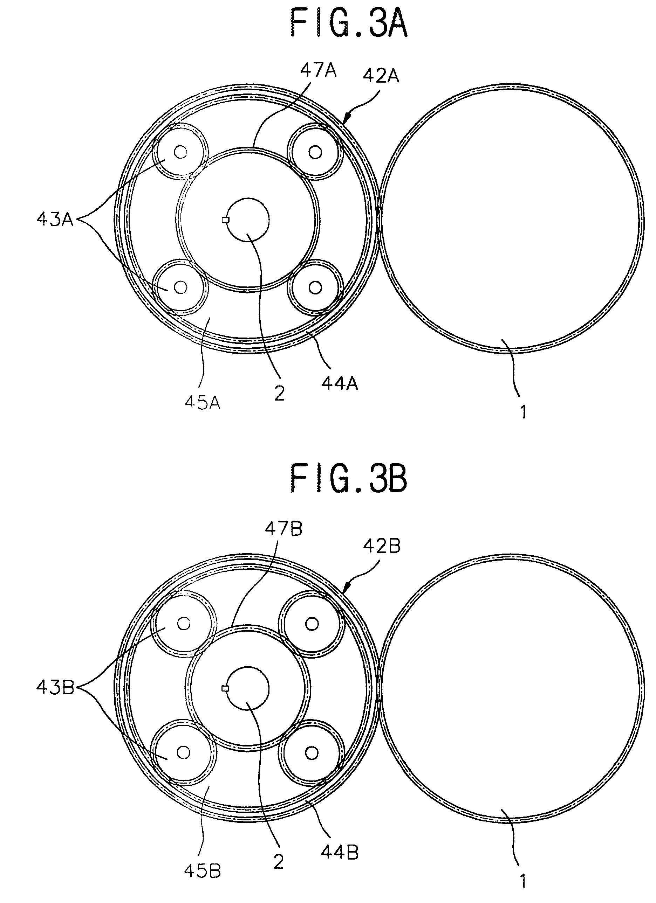

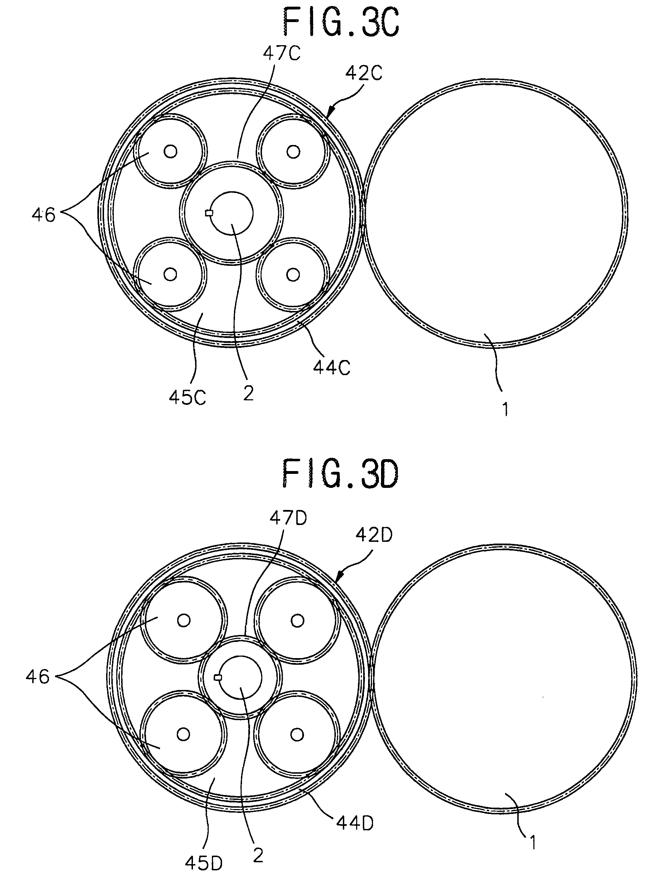

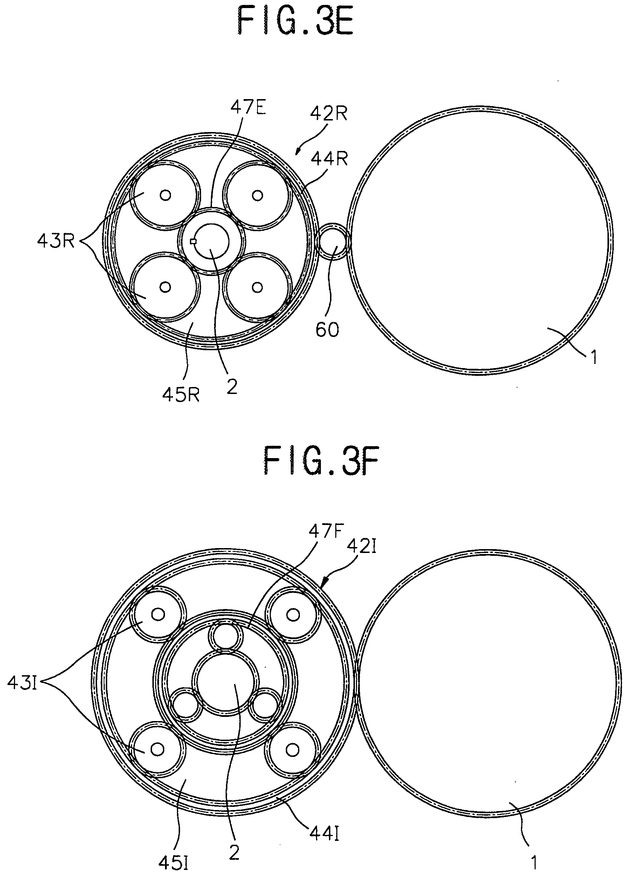

The planetary gearset has a different gear ratio number respectively and rotates in the same direction shown in FIGs.3A to 3F. The planetary gearset comprises a plural sun gearset 47A,47B,47C,47D,47R,47I(combined as reference NO. 47) coaxially aligned with the output shaft 2 and having a different gear ratio number respectively; a plural planetary gearset 43A, 43A, 43B, 43C, 43D, 43R 43I (combined as reference NO.43) in meshing engagement with outer face of the sun gearset 47 and has a different gear ratio number respectively; a plural ring gearset 44A,44B,44C,44D,44R,44I(combined as reference NO.44) forms inner teeth in meshing engagement with the planetary gearset 43 and outer teeth in continuous meshing engagement with the lower gear 1 of the second transmitting member 200, the ring gearset 44 is adapted in the sun gearset 47 and the planetary gearset 43, and a carrier 45A,45B,45C,45R,45I (combined as reference NO.45) for supporting the planetary gearset 43, the carrier 45 formed on both sides of the ring gearset 44 symmetrically.

The forward transmitting gearset 42A,42B,42C has a gear ratio number which increases linearly. The low overdrive gear 42D has a gear ratio number which increases non-linearly regarding the forward transmitting gearset 42A,42B,42C. This enables the radius of the sun gearset 47 to change linearly and non-lineary.

The support bearing member 60 is a one way bearing for increasing the brake efficiency which is assembled bearing assembly.

The carrier 45 brakes by the brake member 30 which transmits the power torque to the output shaft 2.

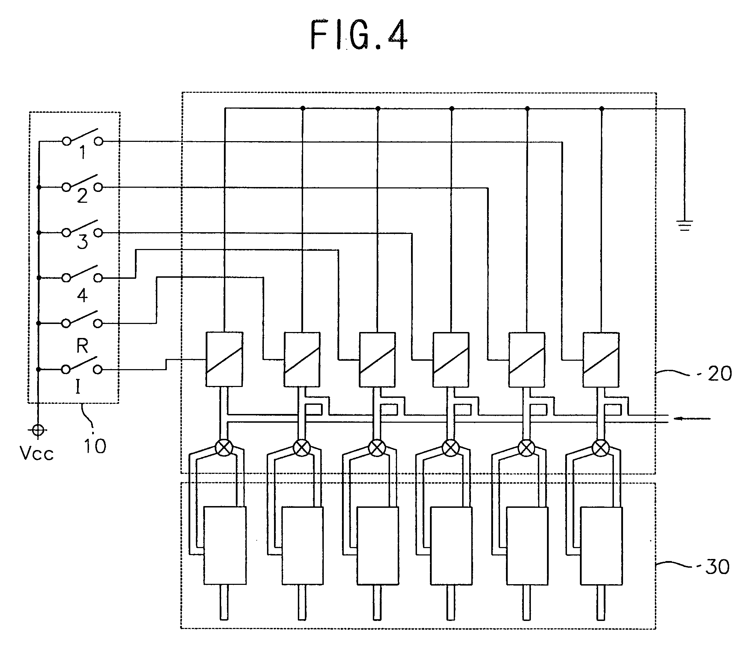

FIG. 4 is a schematic diagram of the brake member 30 comprising a plural brake member 30 for braking the carrier 45, a plural hydraulic drive member 20 for driving the brake member 30 selectively, and a transmission lever 10 for driving the hydraulic drive member 20 which is driven by generating the electric signal.

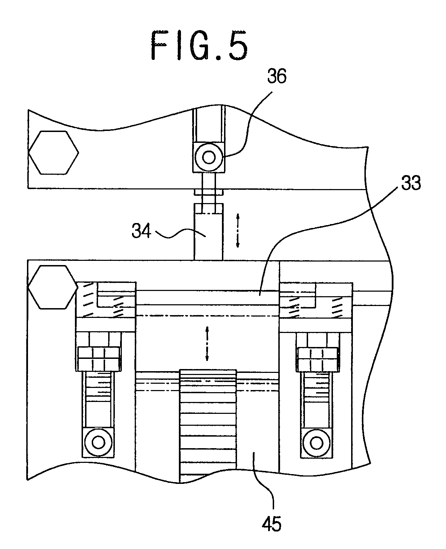

The brake member 30 is shown detailedly in FIG. 1 and FIG. 5.

The brake member 30 includes a brake shoe 33 for making contact and friction with the outer face of the carrier 45, a push rod 34 for pushing or pulling the brake shoe 33, and a cylinder 36 which is driven by the transmission lever 10 for driving the push rod 34. The brake shoe 33 is shaped like a curvature of the outer face of the carrier 45.

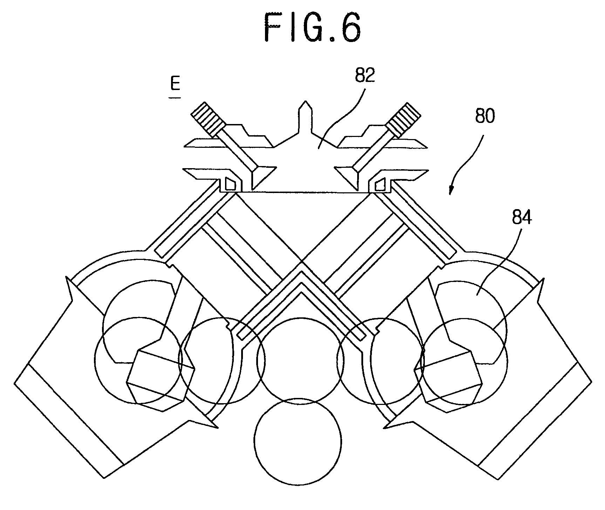

The internal combustion engine 80 of the power source unit E is installed symmetrically by two at least. Referring to FIG. 6, the internal combustion engine 80 is inclined, and a cylinder head 82 of the internal combustion engine 80 is formed solidarity and a crank shaft 84 far away.

This one-body type engine increases efficiency of the engine due to sum of the vectors which are in kinematic momentum.

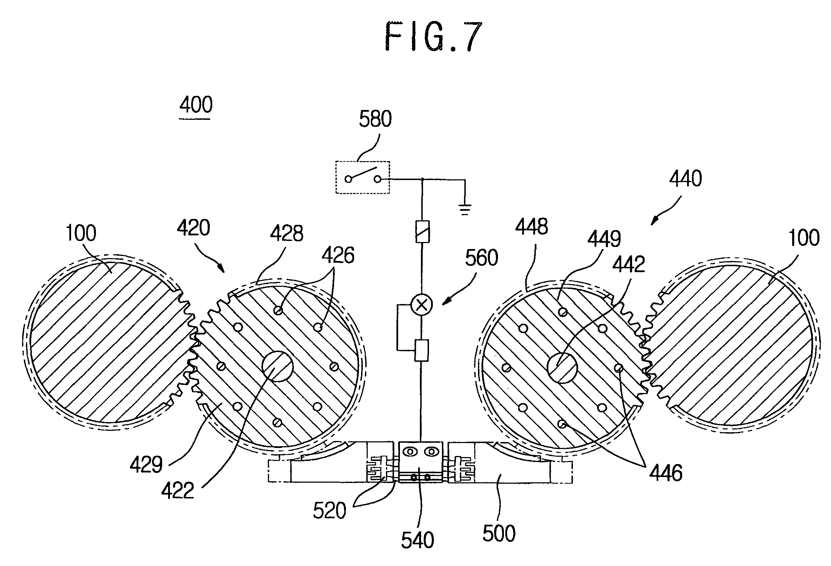

The hyper-overdriver objective is to hyper-overdriving and driving the output shaft 2.
As shown in FIG. 7, the hyper-overdriver 400 includes a normal gear 420 having a planetary gearset which forms a constant gear ratio number and for controlling the driving torque of the first drive transmitting member 100, a high overdrive gear 440 having a planetary gearset which increases non-linearly regarding the low overdrive gear 42D and for hyper-overdriving the output shaft 2. The planetary gearset comprises a plural sun gearset 422,442 coaxially aligned with the upper gear 220 of the second drive transmitting member 200 and having a different gear ratio number respectively; a planetary gearset 426,446 in meshing engagement with outer face of the sun gearset 422,442 and having a different gear ratio number respectively; a ring gearset 428,448 forming inner teeth in meshing engagement with the planetary gearset 426,446 and outer teeth in continuous meshing engagement with the first drive transmitting member 100; the ring gear 428,448 is adapted in the sun gearset 422,442 and the planetary gearset 426,446; and a carrier 429,449 for supporting the planetary gearset 426,446, the carrier 429,449 formed on both side of the ring gearset 428,448 symmetrically.

Referring FIG. 7 a brake bar 500 for selecting a driving mode of the normal gear 420 and the high overdrive gear 440. A crank pin 520 connects with the brake bar 500, a push/pull pressure device 540 connects with the crank pin520, a hydraulic drive member 560 for driving the push/pull pressure device 540 and a select lever 580 generating the electric signal for driving the hydraulic drive member 560 which is driven.

Hereinafter, the operation of the apparatus will be described.

This power transmitting device is operated selectively in a normal mode, low overdrive mode and hyper overdrive mode to seek efficiency of an internal combustion engine 80 as power source unit E.

The normal mode includes driving the automatic transmission 99.

User selects the mode of the transmission 99 which is optimal condition.

The first drive transmitting gear 100 is aligned with the crank shaft 84 and rotated by the power of the internal combustion engine 80, so that the ring gearset 428,448 of the hyper-overdriver 400 is rotated simultaneously. The brake bar 500 does not brake the ring gearset 428,448, so the power torque does not transmit to the first drive transmitting gear 100. To produce a normal mode condition, the brake bar 500 brakes the carrier 429 of the normal gear 420. The planetary gearset 426 which is aligned with the carrier 429 causes braking of the normal gear 420, so that the power torque is not transmitted to the first drive transmitting gear 100. This power torque rotates the ring gearset 44 which in contiuous meshing engagement with the low gear 1 of the second drive transmitting gear 200.

If the brake member 30 does not brake the carrier 45 of the automatic transmission 99 when the ring gearset 44 is rotated, the driving power torque is not outputted.

The automatic transmission 99 is selected in the first level generating the electrical signal, so the hydraulic drive member 20 is driven thereby. The hydraulic drive member 20 drives the brake member 30 to press the cylinder 36. This pressure of the cylinder 36 pushes the push rod 34, and the brake shoe 33 which is connected with the push rod 34 contacts with the carrier 45. The contact with the carrier 45 stops the rotation of the carrier 45 which is caused by the pad 32 of the brake shoe 33. The planetary gearset 43 rotates due to stopping of the carrier 45, and the power torque is output by the low gear 1 for the second drive transmitting gear 200. This state is selected by the automatic transmission 99 as the first level.

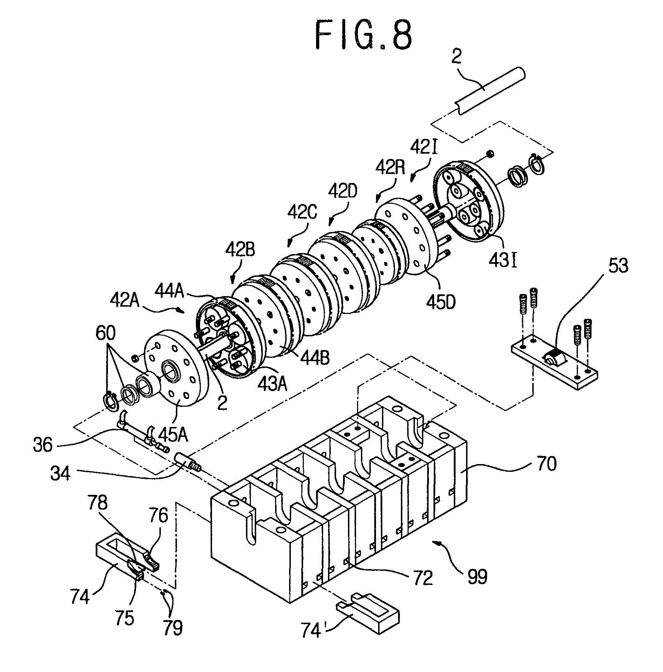

Another embodiment of the brake member 74,74' is shown in FIG. 8. The brake member 74,74' are installed in a lower portion of the carrier 45 symetrically. A housing 70 in which the planetary gearset is installed has a penetration hole 72 both low side thereof. The symmetrical brake bar 74,74' are inserted into the penetration hole 72.

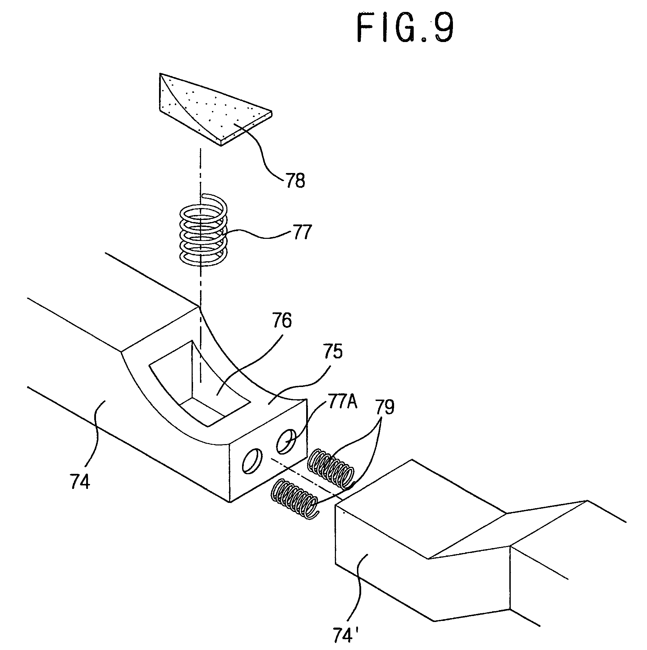

As shown in FIG. 9, the end face of the brake bar 74 forms the friction part 75 which is shaped like the curvature of the outer face of the carrier 45. The friction part 75 has a hollow section 76 forming a cave-like area therein, and the hollow section 76 has an elastic member 77. The upper end side of the elastic member 77 attaches to the friction member 78 which is shaped like triangular. The elastic member 77 is a rigid spring, and the friction member 78 is conventional brake pad.

The end side of the brake bar 74 forms a hole 77A for accommordating springs 79. The springs 79 pushes the another brake bar 74' when detatched on the carrier 45. Thus brake bar 74,74' pushes each other into the housing 70.

The internal combustion engine 80 operates continuously to increase the power torque, and the speed of the output shaft 2 is limited by the gear ratio number of the first level selected. To increase the speed of the output shaft 2, the transmission lever 10 is selected to a second or third level. Referring to FIG. 6, the brake 3 is pressed due to the electrical signal which is generated in the transmission lever 10, the hydraulic pressure of the brake 3 releases the pressure of the hydraulic drive member 20 and drives the release member 50. The release member 50 detaches the brake shoe 33 from the carrier 33 by the push member 52, so that the power torque is not output resulting in idling.

When the transmission lever 10 is selected to upper-level during idling, the electrical signal is generated by the transmission lever 10 driving another hydraulic drive member 20. The other hydraulic drive member 20 drives the other cylinder 36 of the brake member 30, so that the brake member 30 is driven by transmission lever 10.

The upper-level of the transmission lever 10 operates as described above similarly.

When the transmission lever 10 is selected to the low drive mode for outputting high speed as in overdrive, the brake member 30 brakes the carrier 45 of the low overdrive gear 42D. The output shaft 2 rotates fast due to the gear ratio which incrases non-linearly with respect to the low level of the transmission 99. To achieve a backward direction of the output shaft 2, the idle gear 53 is aligned with the backward transmission gear 43 with the second drive transmitting gear 200.

The backward direction is driven by braking the carrier 45 of the backward transmission gear 43. This operation is the same as the described above.

Hereinafter the hyper-overdrive mode is descrived.

When the selected 2500 or more revolutions per minute(r.p.m.)of the output shaft 2 is preferable. The selecter 580 is selected when the power torque is transmitting by the forward transmission gear 42C or low overdrive gear 42D, and the electrical signal which is generated at the selecter 580 operates according to the hydraulic drive member 560. The hydraulic drive member 560 pulls or pushes the push/pull pressure device 540. The operation of the pushing or pulling depends on the installing of the push/pull pressure device 540. The brake bar 500 is released from the carrier 429 of the normal gear 420 and contacts with the carrier 449 of the high overdrive gear 440 to stop. Stopping the carrier 449 of the high overdrive gear 440 causes the carrier 429 of the normal gear 420 to rotate, the planetary gearset 426 revolves thereby preventing transmitting of the power torque to the output shaft 2.

Simultaniously, the power torque is transmitted by the sun gear 442 of the high overdrive gear 440 when the planetary gearset 446 of the high overdrive gear 440 stops. The gear ratio number of the sun gear 442 and the planetary gearset 446 increases non-linearly regarding the low overdrive gear, so that the speed of the output shaft 2 is higher with regard to the normal overdrive condition.

Non-linear increase of the gear ratio outputs the hyper-speed of the output shaft 2 so only one power source unit is used advantageously.

Preferably, the hyper-overdriver is driven under low overdriving condition, so it can be limited under low overdrive mode.

The overturn gearset 47I of the transmission 99 inverses the direction of the output shaft 2. When this trasmission device is braked, the brake member 30 brakes the carrier 45I. Thus the speed of the output shaft 2 is reduced rapidly. To increase the brake efficiency, the overturn gearset 47I is driven.

This invention provides the automatic transmission with an overdrive mode. The automatic transmission is in continuous meshing engagement with the input power source, theryby eliminating operation of the transmission. This invention has an advantage of the electric signal to drive the transmission.

Furthermore, the hyper-overdriver causes the hyper-speed of the output shaft according to the overdriving state of the automatic transmission. The limitation of the single power source unit is overcome by the hyper-overdriver. It can overcome the maximum output speed with hyper-overdrive speed.

## Claims

1. Power transmitting device with multiple overdriver comprising:
a power source unit having an internal combustion engine (80);
a first drive transmitting member (100) for transmitting the driving power by the power source;
a second drive transmitting member (200) having an upper gear (220) and a lower gear (1) for transmitting the driving power by the first drive transmitting member (100);
an output shaft (2) for outputting the torque and speed by the second drive transmitting member (200);
a hyper-overdriver (400) connects the first drive transmitting member (100) and the second drive transmitting member (200), for hyper-overdriving the number of the speed ratio of the output shaft (2) and controlling the output driving power which is inputted by the first drive transmitting member (100); and
an automatic transmission (99) in continuous meshing engagement with the lower gear (1) of the second drive transmitting member (200) and the output shaft, the transmission (99) being coaxially aligned by a support bearing member (60), the transmission (99) including,
a forward transmitting gearset (45A, 45B, 45C) for changing the torque which is transmitted by the second drive transmitting member (200) into the number of the speed ratio of at least three therein,
a low overdrive gear (42D) for overdriving the speed of the output shaft (2), and
a backward transmitting gearset (42R) having an idle gear for reversing the rotation of the second transmitting member.

2. The power transmitting device as claimed in claim 1, wherein said internal combustion engine (80) of the power source unit is installed symmetrically two at least.

3. The power transmitting device as claimed in claim 1, wherein said internal combustion engine (80) is inclined, a cylinder head of the internal combustion engine (80) is formed solidarity and a crank shaft far away.

4. The power transmitting device as claimed in claim 1, wherein said forward transmitting gearset (45A, 45B, 45C) has a gear ratio number which increases linearly.

5. The power transmitting device as claimed in claim 1, wherein said low overdrive gear (42D) has a gear ratio number which increases non-linearly regarding the forward transmitting gearset (45A, 45B, 45C).

6. The Power transmitting device as claimed in claim 1, wherein said automatic transmission comprises;
a plural sun gearset (47A, 47B, 47C, 47D, 47R, 47I) coaxially aligned with the output shaft (2) and having a different of gear ratio number respectively;
a plural planetary gearset (43A, 43B, 43C, 43D, 43R, 43I) in meshing engagement with outer face of the sun gearset (47A, 47B, 47C, 47D, 47R, 47I) and having a different of gear ratio number respectively;
a plural ring gearset (44A, 44B, 44C, 44D, 44R, 44I) forming an inner teeth in meshing engagement with the planetary gearset and an outer teeth in continuous meshing engagement with the lower gear (1) of the second transmitting member (200), the ring gear is adapted in the sun gearset and the planetary gearset;
a carrier (45A, 45B, 45C, 45R, 45I) for supporting the planetary gearset, the carrier formed on both side of the ring gearset symmetrically;
a plural brake member (30) for braking the carrier;
a plural hydraulic drive member (20) for driving the brake member selectively; and
a transmission lever (10) for driving the hydraulic drive member (20) which is driven by generating the electric signal.

7. The power transmitting device as claimed in claim 6, wherein said brake member (30) includes;
a brake shoe (33) for making contact and friction with the outer face of the carrier (45);
a push rod (34) for pushing or pulling the brake shoe (33); and
a cylinder (36) which is driven by the transmission lever for driving the push rod (34).

8. The power transmitting device as claimed in claim 7, wherein said brake shoe (33) is shaped like a curvature of the outer face of the carrier (45).

9. The power transmitting device as claimed in claim 6, wherein said brake member (30) includes;
a brake bar (74, 74');
a friction part (75) forming an end side of the brake bar (74, 74') and shaped like the curvature of the outer face of the carrier (45);
a hollow section (76) forming the friction part (75);
an elastic member (77) is accommodated in the hollow section; and
a friction member (78) for braking the outer face of the carrier and attaching to the elastic member (77).

10. The power transmitting device as claimed in claim 1, wherein said support bearing member (60) is a one-way bearing which is rotated in a one way direction.

11. The power transmitting device as claimed in claim 1, wherein said hyper-overdriver (400) includes;
a normal gear (420) having a planetary gearset which forms a constant gear ratio number and for controlling the driving torque of the first drive transmitting member (100);
a high overdrive gear (400) having a planetary gearset which increases non-linearly regarding the low overdrive gear (42D) and for hyper-overdriving the output shaft (2);
a brake bar (500) for selecting a driving mode of the normal gear (420) and the high overdrive gear;
a crank pin (520) connecting with the brake bar (500);
a push/pull pressure device (540) connecting with the crank pin (520);
a hydraulic drive member (560) for driving the push/pull pressure device (540); and
a select lever (580) generating the electric signal for driving the hydraulic drive member (560) which is driven.

12. The power transmitting device as claimed in claim 11, wherein said high overdrive gear (400) includes; a plural sun gearset (422, 442) coaxially aligned with the upper gear (220) of the second drive transmitting member (200) and having a different gear ratio number respectively;
a planetary gearset (426, 446) in meshing engagement with outer face of the sun gearset (442, 422) and having a different gear ratio number respectively;
a ring gearset (428, 448) forming an inner teeth in meshing engagement with the planetary gearset (426, 446) and an outer teeth in continuous meshing engagement with the first drive transmitting member (100), the ring gear is adapted in the sun gearset (422, 442) and the planetary gearset (426, 446); and
a carrier (429, 449) for supporting the planetary gearset (426, 446), the carrier formed on both side of the ring gearset (428, 448) symmetrically.

## Patentansprüche

1. Vorrichtung zur Kraftumsetzung mit mehrfach ausgelegtem Schnellganggetriebe bestehend aus:
einer Antriebsquelle mit Verbrennungsmotor (80);
einem primären Antriebselement (100) zur Übertragung der von der Antriebsquelle bereitgestellten Antriebsleistung;
einem sekundären Antriebselement (200) versehen mit einem schnell laufendend Getrieberad (220) und einem langsam laufenden Getrieberad (1) zur Umsetzung der Antriebsleistung des primären Antriebselements (100);
einer an das sekundäre Antriebselement (200) gekoppelten Getriebehauptwelle (2), die zur Übertragung von Drehmomenten und Drehzahlen dient;
einem Überdrehzahl-Schnellganggetriebe (400) als Verbindungsglied zwischen dem ersten Antriebselement (100) und dem zweiten Antriebselement (200), das ein stark überhöhtes Drehzahlverhältnisses an der Getriebehauptwelle (2) herstellt und die vom ersten Antriebselement (100) gelieferte Ausgangsleistung steuert; sowie
einem Automatikgetriebe (99), das sich im ständigen Eingriff mit dem langsam laufenden Getrieberad (1) des sekundären Antriebselements (200) und der Getriebehauptwelle befindet, wobei das Getriebe (99) durch ein Auflagerelement (60) koaxial ausgerichtet wird. Das Getriebe (99) beinhaltet
einen Vorschubzahnradsatz (45A, 45B, 45C) zur Übersetzung des Drehmoments am sekundären Antriebselement (200) mit einer Übersetzung von mindestens 3:1,
einem langsam laufenden Schnellganggetriebe (42D), das die Drehbewegung an der Getriebehauptwelle (2) in eine überhöhte Drehzahl umsetzt und
einem gegenläufigen Zahnradsatz (42R), dessen Zwischenrad zur Umkehr der Drehrichtung am sekundären Antriebselement dient.

2. Eine Vorrichtung zur Kraftumsetzung nach Anspruch 1, wobei der Verbrennungsmotor (80) der Antriebsquelle symmetrisch angeordnet ist und aus mindestens zwei Elementen besteht.

3. Eine Vorrichtung zur Kraftumsetzung nach Anspruch 1, deren Verbrennungsmotor (80) schräg eingebaut ist, wobei der Zylinderkopf des Verbrennungsmotors (80) integriert und die Kurbelwelle abgesetzt ist.

4. Eine Vorrichtung zur Kraftumsetzung nach Anspruch 1, deren Vorschubzahnradsatz (45A, 45B, 45C) ein linear ansteigendes Übersetzungsverhältnis aufweist.

5. Eine Vorrichtung zur Kraftumsetzung nach Anspruch 1, deren langsam laufendes Schnellganggetriebe (2D) bezogen auf den Vorschubzahnradsatz (45A, 45B, 45C) ein nicht-linear ansteigendes Übersetzungsverhältnis aufweist.

6. Eine Vorrichtung zur Kraftumsetzung nach Anspruch 1, deren Automatikgetriebe ein mehrteiliges Sonnengetriebe (47A, 47B, 47C, 47D, 47R, 47I) beinhaltet, das koaxial zur Getriebehauptwelle (2) ausgerichtet ist und ein davon verschiedenes Übersetzungsverhältnis aufweist;
ein mehrteiliges Planetenradgetriebe (43A, 43B, 43C, 43D, 43R, 43I), dessen Zahnräder in ständigem Eingriff mit der Außenverzahnung des Sonnenrades (47A, 47B, 47C, 47D, 47R, 47I) stehen und das ein von diesem verschiedenes Übersetzungsverhältnis aufweist;
ein mehrteiliger Zahnkranz (44A, 44B, 44C, 44D, 44R, 44I), dessen Innenverzahnung in ständigem Eingriff mit dem Planetenradgetriebe steht und dessen Außenverzahnung in direktem Eingriff mit dem langsam laufenden Getrieberad am sekundären Antriebselement (200) steht, wobei der Zahnkranz auf das Sonnenrad und das Planetenradgetriebe zugeschnitten ist;
ein Käfig (45A, 45B, 45C, 45R, 451) für das Planetenradgetriebe, der den Zahnkranz beidseitig symmetrisch umfasst;
eine mehrteilige Bremseinrichtung (30), die den Käfig abbremst;
ein mehrteiliges, hydraulisches Stellglied (20) für die selektive Betätigung der Bremseinrichtung; und
ein Hebelarm (10) zur Betätigung des hydraulischen Stellgliedes (20) und dieses durch einen elektrischen Impuls auslöst.

7. Eine Vorrichtung zur Kraftumsetzung nach Anspruch 6, wobei die angegebene Bremseinrichtung (30) folgende Komponenten beinhaltet;
einen Bremsklotz (33), der an der Außenseite des Käfigs (45) anliegt und diesen durch Reibungswirkung bremst
eine Stößelstange (34) zur Zug- und Druckbetätigung des Bremsklotzes (33) und
einen Zylinder (36), der die Stößelstange (34) über einen Hebelarm betätigt.

8. Eine Vorrichtung zur Kraftumsetzung nach Anspruch 7, deren Bremsklotz (33) entsprechend der Käfigrundung (45) ausgeformt ist.

9. Eine Vorrichtung zur Kraftumsetzung nach Anspruch 6, wobei besagte Bremseinrichtung (30) folgende Komponenten beinhaltet; eine Bremszugstange (74, 74')
einen Reibpartner (75) am Kopfende der Bremszugstange (74, 74'), der entsprechend der Käfigrundung (45) ausgeformt ist;
ein Hohlprofil (76) als Reibpartner (75);
ein elastisches Element (77) im Hohlprofil; und
einen Reibpartner (78), der die Außenfläche des Käfigs bremst und mit dem elastischen Element (77) gekoppelt ist.

10. Eine Vorrichtung zur Kraftumsetzung nach Anspruch 1, deren Auflageelement (60) als Einweglager ausgeführt ist, das Drehung in eine Richtung zulässt.

11. Eine Vorrichtung zur Kraftumsetzung nach Anspruch 1, wobei besagtes Schnellganggetriebe (400) folgende Komponenten beinhaltet;
ein Normalgetriebe (420) mit einem Planetenradgetriebe und konstantem Übersetzungsverhältnis zur Steuerung des Antriebsmoments am primären Antriebselement (100);
ein schnell laufendes Schnellganggetriebe (400) dessen Planetenradgetriebe ) bezogen auf das langsam laufende Schnellganggetriebe (42D) nicht-linear übersetzt ist und das die Getriebehauptwelle (2) mit stark überhöhter Drehzahl antreibt;
eine Bremszugstange (200) für die Auswahl der Getriebeübersetzung am normal laufenden Zahnrad (420) und am schnell laufenden Schnellganggetriebe;
einem mit der Bremszugstange (500) gekoppelten Kurbelzapfen (520);
einer mit dem Kurbelzapfen (520) verbundenen Zug-/Druckvorrichtung (540);
einem hydraulischen Stellglied (560) zum Antrieb der Zug-/Druckvorrichtung (540); und
einem Wahlhebel (580), der das hydraulische Stellglied (560) mittels eines elektrischen Impulses auslöst.

12. Eine Vorrichtung zur Kraftumsetzung nach Anspruch 11, wobei besagtes schnell laufendes Schnellganggetriebe (400) folgende Komponenten beinhaltet;
ein mehrteiliges Sonnenradgetriebe (422, 442), das koaxial zur oberen Getriebestufe (220) des sekundären Antriebselements (200) angeordnet ist und ein davon verschiedenes Übersetzungsverhältnis aufweist.
ein Planetenradgetriebe (426, 446), das in ständigem Eingriff mit der Außenverzahnung des Sonnenradgetriebes (442, 422) steht und ein davon verschiedenes Übersetzungsverhältnis aufweist;
einen Zahnkranz (428, 448), dessen Innenverzahnung in ständigem Eingriff mit dem Planetenradgetriebe (426, 442) steht und dessen Außenverzahnung in direktem Eingriff mit dem primären Antriebselement (100) steht, wobei der Zahnkranz auf das Sonnenrad- (422, 442) und das Planetenradgetriebe (426, 446) zugeschnitten ist; und
ein Käfig (429, 449) für das Planetenradgetriebe (426, 446), der den Zahnkranz (428, 448) beidseitig symmetrisch umfasst.

## Revendications

1. Dispositif de transmission de puissance avec surmultiplicateur multiple comprenant:
une unité d'alimentation ayant un moteur à combustion interne (80);
un premier organe de transmission (100), pour transmettre la puissance motrice par le bloc d'alimentation;
un deuxième organe de transmission (200), ayant un engrenage supérieur (220) et un engrenage inférieur (1) pour transmettre la puissance motrice par le premier organe de transmission (100);
un arbre de sortie (2) permettant au deuxième organe de transmission (200) de produire le couple moteur et la vitesse;
un hyper surmultiplicateur (400) qui relie le premier organe de transmission (100) au deuxième organe de transmission (200) pour surmultiplier le nombre de rapports de transmission de l'arbre de sortie (2) et contrôler la puissance motrice de sortie qui est produite par le premier organe de transmission (100); et
une transmission automatique (99) dans un embrayage à engrènement continu avec l'engrenage inférieur (1) du deuxième organe de transmission (200) et l'arbre de sortie, la transmission (99) étant alignée de manière coaxiale par un palier-support by (60), la transmission (99) comprenant,
un train d'engrenages de marche avant (45A, 45B, 45C) permettant de faire passer le couple moteur qui est transmis par le deuxième organe de transmission (200) au nombre de rapports de démultiplication d'au moins trois d'entre eux,
une transmission surmultipliée basse (42D) pour surmultiplier la vitesse de l'arbre de sortie (2) et
un train d'engrenages de marche arrière (42R) ayant un engrenage ralenti pour inverser la rotation du deuxième organe de transmission.

2. Le dispositif de transmission de puissance selon la revendication 1, dans laquelle ledit moteur à combustion interne (80) de l'unité d'alimentation est disposé symétriquement (deux au minimum).

3. Le dispositif de transmission de puissance selon la revendication 1, dans laquelle ledit moteur à combustion interne (80) est incliné, une culasse du moteur à combustion interne (80) lui est solidaire et un vilebrequin en est séparé.

4. Le dispositif de transmission de puissance selon la revendication 1, dans laquelle le rapport de démultiplication dudit train d'engrenages de marche avant (45A, 45B, 45C) augmente de façon linéaire.

5. Le dispositif de transmission de puissance selon la revendication 1, dans laquelle le nombre de rapports de démultiplication de ladite transmission surmultipliée basse (42D) augmente de façon non linéaire par rapport au train d'engrenages de marche avant (45A, 45B, 45C).

6. Le dispositif de transmission de puissance selon la revendication 1, dans laquelle ladite transmission automatique comprend : plusieurs roues solaires (47A, 47B, 47C, 47D, 47R, 47I) alignées de manière coaxiale avec l'arbre de sortie (2) et ayant toutes des rapports de démultiplication différents;
des engrenages planétaires multiples (43A, 43B, 43C, 43D, 43R, 43I) engrenés avec la face externe des roues solaires (47A, 47B, 47C, 47D, 47R, 471), ayant tous des rapports de démultiplication différents ;
une couronne multiple (44A, 44B, 44C, 44D, 44R, 441) formant une denture intérieure engrenée avec les engrenages planétaires, une denture à engrènement continu avec l'engrenage inférieur (1) du deuxième organe de transmission (200), la couronne est adapté aux roues solaires et aux engrenages planétaires ;
un support (45A, 45B, 45C, 45R, 451) servant de support aux engrenages planétaires, le support étant symétrique aux deux côtés de la couronne ;
un organe de freinage multiple (30) permettant de freiner le support ;
un organe de transmission hydraulique multiple (20) pour entraîner l'organe de freinage de façon sélective ; et
un levier de transmission (10) pour entraîner l'organe de transmission hydraulique (20) qui est actionné par émission d'un signal électrique.

7. Le dispositif de transmission de puissance selon la revendication 6, dans laquelle ledit organe de freinage (30) comprend :
un patin de frein (33) pour créer un contact et une friction avec la face externe du support (45)
une tige de culbuteur (34) pour pousser ou tirer le patin de frein (33) et
un cylindre (36) qui est entraîné par le levier de transmission pour entraîner la tige de culbuteur (34).

8. Le dispositif de transmission de puissance selon la revendication 7, dans laquelle ledit patin de frein (33) est en forme de croissant en contact avec la face externe du support (45).

9. Le dispositif de transmission de puissance selon la revendication 6, dans laquelle ledit organe de freinage (30) comprend :
une barre de frein (74, 74')
un élément de friction (75) constituant le bout de la barre de frein (74, 74') et en forme de croissant en contact avec la face externe du support (45);
une section creuse (76) formant l'élément de friction (75);
un organe élastique (77) se logeant dans la section creuse ; et
un organe de friction (78) pour freiner la face externe du support et fixer l'organe élastique (77).

10. Le dispositif de transmission de puissance selon la revendication 1, dans laquelle ledit palier-support (60) est un support unidirectionnel tournant dans une seule direction.

11. Le dispositif de transmission de puissance selon la revendication 1, dans laquelle ledit hyper surmultiplicateur (400) comprend ;
un engrenage normal (420) avec des engrenages planétaires qui présentent un nombre constant de rapports de démultiplication, avec contrôle du couple moteur du premier organe de transmission (100) ;
une transmission surmultipliée haute (400) ayant des engrenages planétaires qui augmentent de façon non linéaire par rapport à la transmission surmultiplié basse (42D) et pour produire une hyper-surmultiplication de l'arbre de sortie (2) ;
une barre de frein (200) pour sélectionner le mode de transmission de l'engrenage normal (420) et de la transmission surmultipliée haute ;
un maneton (520) relié à la barre de frein (500) ;
un dispositif de pression à poussée - traction (540) relié au maneton (520) ;
un organe de transmission hydraulique (560) pour actionner le dispositif de pression à poussée - traction (540) ; et
un levier de sélection (580) émettant le signal électrique permettant d'actionner l'organe de transmission hydraulique (560) qui est alors entraîné.

12. Le dispositif de transmission de puissance selon la revendication 11, dans laquelle ladite transmission surmultipliée haute (400) comprend :
des roues solaires multiples (422, 442) alignées de façon coaxiale avec l'engrenage supérieur (220) du deuxième organe de transmission (200) et présentant des nombres de rapports de démultiplication différents ;
des engrenages planétaires (426, 446) engrenés avec la face externe des roues solaires (442, 422) et présentant des nombres de rapports de démultiplication différents ;
une couronne (428, 448) formant une denture intérieure engrenée avec les engrenages planétaires (426, 446), une denture à engrènement continu avec le premier organe de transmission (100); la couronne est adapté aux roues solaires (422, 442) et aux engrenages planétaires (426, 446) ; et
un support (429, 449) servant de support aux engrenages planétaires (426, 446), le support étant symétrique sur les deux côtés de la couronne (428, 448).
